# EUROPÄISCHE PATENTSCHRIFT

(11) **EP 0 328 981 B1**
(45) Veröffentlichungstag und Bekanntmachung des Hinweises auf die Patenterteilung: **13.10.1993**
(21) Anmeldenummer: 89102008.3
(22) Anmeldetag: 06.02.1989
(51) Int. Cl.: C09D 5/24, H01B 1/12, H01B 1/24

(54) **Elektrisch leitende Beschichtungsmasse, Verfahren zu ihrer Herstellung und ihre Verwendung**
Electrically conducting coating compound, process for its preparation and its use
Compositions d'enduction, conductrices d'électricité, procédé pour leur préparation et leur utilisation

(30) Priorität: 13.02.1988 DE 3804521
(43) Veröffentlichungstag der Anmeldung: 23.08.1989
(73) Patentinhaber: HOECHST AKTIENGESELLSCHAFT, 65926 Frankfurt am Main (DE)
(72) Erfinder: Kämpf, Günther, Dr., D-6227 Oestrich-Winkel (DE); Feldhues, Michael, Dr., D-6232 Bad Soden am Taunus (DE)

(56) Entgegenhaltungen:
- EP-A- 0 203 438
- EP-A- 0 253 594
- EP-A- 0 292 905

## Beschreibung

Die Erfindung bezieht sich auf eine elektrisch leitende Beschichtungsmasse, welche elektrostatische Aufladung von Oberflächen zu verhindern vermag, ein Verfahren zu ihrer Herstellung und ihre Verwendung.

Üblicherweise müssen Verpackungen aus sehr gut isolierenden Kunststoffen aus Gründen der Arbeitssicherheit wie beispielsweise Explosionsschutz, mit einer antistatischen Ausrüstung versehen werden. Dabei sind transparente leitfähige Folien besonders erwünscht, weil eine Identifikation des Inhalts möglich ist.

Auch bei anderen Verwendungen führt die hohe elektrostatische Aufladbarkeit der üblichen Kunststoffe zu Schwierigkeiten:
- schlechtes Aufwickelverhalten von Kalanderfolien und Fasern.
- Aneinanderhaften von Folienbahnen beim Verarbeiten und auf Abfüllanlagen.
- Funkenbildung beim Entleeren von Kunststoffgebinden kann in Gegenwart von explosiven Gas-Luftgemischen (beispielsweise Lösemitteln) zu gefährlichen Explosionen führen.
- Bedruckbarkeit von Kunststoffteilen wird gestört.
- Beim Lagern ziehen Kunststoffteile Staub an und verschmutzen.
- Bei der Verpackung empfindlicher elektronischer Bauteile werden diese durch elektrostatische Aufladung beim Auspacken zerstört.
- Photographische Filme und Röntgenfilme können durch elektrostatische Aufladungen durch sogenanntes "Verblitzen" unbrauchbar gemacht werden.

Zur Abführung der Ladungen von der Kunststoffoberfläche gibt es mehrere Möglichkeiten:
a) Compounds aus Kunststoffen und Ruß oder einem Metallpulver oder Metallfasern. Da sie erst wirksam werden, wenn sich die leitfähigen Teilchen berühren (Percolation), sind hohe Zugabemengen an leitfähigem Material notwendig (typisch 5 % bis 30 %). Dadurch wird das typische Eigenschaftsbild des Kunststoffs stark verändert, seine mechanischen Eigenschaften werden deutlich schlechter und und die optischen Eigenschaften wie Transparenz und Farbe total verändert.
b) Durch eine intensive Corona-Entladung lassen sich bei manchen Kunststoffen die Oberflächen soweit verändern, daß keine elektrostatische Aufladung mehr eintritt. Leider läßt die Wirkung schon nach kurzer Zeit nach, so daß diese Methode für Langzeitanwendung nicht verwendbar ist und oft nur eingesetzt wird, um die Beschichtbarkeit zu verbessern.
c) Durch die Zugabe von Antistatika auf die Kunststoffoberfläche, z.B. durch Tauchen, Tränken oder Besprühen werden leitfähige Oberflächen erzeugt. Man kann diese Antistatika aber auch in das Volumen des Kunststoffs einbringen und so eine dauerhafte Wirkung erzielen. In beiden Fällen ist von großem Nachteil, daß der Oberflächenwiderstand der so behandelten Kunststoffe stark von der Luftfeuchtigkeit abhängt; insbesondere, wenn die Materiallien sehr geringer Feuchte ausgesetzt werden, nimmt ihre Wirksamkeit schnell ab.
d) Kunststoffe können mit Metallen oder anorganischen Halbleitern im Vakuum oder nach dem Sputter-Verfahren bedampft werden. Diese Metallschichten müssen sehr dünn aufgebracht werden, wenn eine ausreichende Transparenz verlangt wird. Infolgedessen sind diese Schichten sehr empfindlich und müßten durch zusätzliche Schichten gegen mechanische und chemische Beschädigung geschützt werden. Dieses Verfahren ist kompliziert, aufwendig und teuer. Die Auswahl der verwendbaren Materialien ist zudem noch durch Anfälligkeit gegen Korrosion begrenzt. Auf Kunststoffolien aufgedampfte Metallschichten zeigen außerdem oft eine schlechte Schichthaftung, die durch zusätzliche Prozeß-Schritte, wie z.B. die oben erwähnte Corona-Behandlung, verbessert werden muß. Bei diesen mehrlagigen Folien-Systemen ist die Metallschicht noch durch eine dielektrische Schicht nach außen gegen mechanische Beschädigung geschützt, deren Schichtdicke wiederum sehr genau eingehalten werden muß, um den gewünschten Oberflächenwiderstand zu erreichen. Zusammen mit einer herkömmlichen antistatischen Schicht auf der Folien-Innenseite kann es auch zu einem Speichereffekt für die elektrischen Ladungen kommen, wodurch das Verhindern elektrostatischer Aufladungen nur ungenügend gelöst wird. Solche Produkte eignen sich deshalb nur zur Abschirmung gegen äußere Felder (Faraday-Käfig).

Es wurde auch bereits ein Verfahren zur Herstellung elektrisch leitfähiger Schichten vorgeschlagen, das weitgehend die oben geschilderten Unzulänglichkeiten vermeidet (vgl. DE-A 3717668). Jedoch werden dort noch vorwiegend dipolar aprotische Lösemittel eingesetzt, die bei technischen Prozessen zu einem hohen Aufwand beim Personenschutz führen, sowie bei der Geräteauslegung zusätzliche Sicherheitsvorkehrungen erfordern. Außerdem sind die dort beschriebenen leitfähigen Schichten aus Oligomeren im sichtbaren Bereich des optischen Spektrums zwar transparent, aber aufgrund ihrer starken Absorption in diesem Bereich auch deutlich gefärbt. Dies macht diese leitfähigen Schichten für einige Anwendungen weniger geeignet.

Aufgabe der vorliegenden Erfindung ist es daher, elektrisch leitfähige Schichten zu finden, die die obengenannten Nachteile nicht aufweisen und einfach auf beliebige Oberflächen aufgebracht werden können.

Es wurde gefunden, daß eine Beschichtungsmasse bestehend aus einem löslichen elektrisch leitenden Polymer von substituierten Thiophenen und einem löslichen nicht leitenden Polymer eine gut haftende elektrisch leitende Schicht auf verschiedenen Substraten ergeben kann.

Die Erfindung betrifft somit eine elektrisch leitende Beschichtungsmasse bestehend aus 10 bis 90 Gew.-% eines elektrisch leitenden Polymeren mit 11 bis 100 Struktureinheiten, die durch Verknüpfung in 2-Stellung und/oder 5-Stellung miteinander verbunden sind, im statistischen Mittel bestehend aus
60 bis 100 mol-% Struktureinheiten, die sich von mindestens einem Monomeren der Formel (I) ableiten 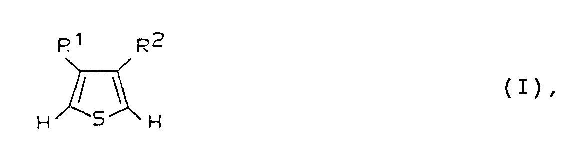
worin
R¹ eine geradkettige oder verzweigte C₆-C₃₀-Alkoxygruppe und
R² ein Wasserstoffatom oder eine C₁-C₃₀-Alkoxygruppe darstellen,
0 bis 40 mol-% Struktureinheiten, die sich von mindestens einem Monomeren der Formel (II) ableiten 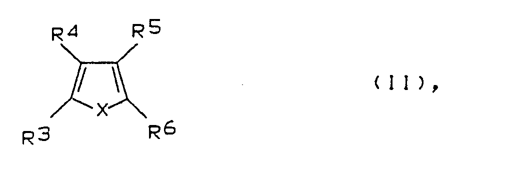
worin
R⁴ und R⁵ unabhängig voneinander ein Wasserstoffatom, ein Halogenatom, eine C₁-C₁₂-Alkylgruppe, Alkoxyalkyl, Arylmethyl, Aryl, eine C₁-C₄-Alkoxygruppe oder -O(CH₂CH₂O)ₙCH₃ mit n = 1 bis 4, bedeuten oder zusammen mit den sie verbindenden C-Atomen einen aromatischen Ring bilden,
R³ und R⁶ unabhängig voneinander ein Wasserstoffatom bedeuten oder R³ zusammen mit R⁴ und den sie verbindenden C-Atomen oder R⁵ zusammen mit R⁶ und den sie verbindenden C-Atomen jeweils einen aromatischen Ring bilden,
X ein Sauerstoffatom, ein Schwefelatom, eine NH-Gruppe, eine N-Alkylgruppe oder eine N-Arylgruppe bedeutet,
0 bis 40 mol-% Struktureinheiten, die sich von mindestens einem Monomeren der Formel (III) ableiten 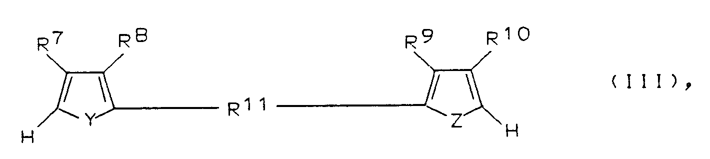
worin
R⁷, R⁸, R⁹ und R¹⁰ unabhängig voneinander ein Wasserstoffatom, eine C₁-C₁₂-Alkylgruppe, eine Arylgruppe oder eine C₁-C₃₀-Alkoxygruppe bedeuten,
Y und Z unabhängig voneinander ein Sauerstoffatom, ein Schwefelatom, eine NH-Gruppe, eine N-Alkylgruppe oder N-Arylgruppe bedeuten,
R¹¹ eine Arylengruppe, eine Heteroarylengruppe oder ein konjugiertes System der Formel (-CH=CH-)ₚ, worin p null, 1, 2 oder 3 ist, bedeutet,
0 bis 40 mol-% Struktureinheiten, die sich von mindestens einer Verbindung der Formel (IV) ableiten 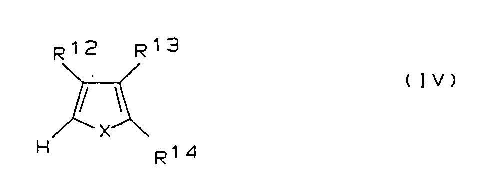
worin
R¹² und R¹³ unabhängig voneinander ein Wasserstoffatom, ein Halogenatom, eine C₁-C₁₂-Alkylgruppe, eine C₁-C₃₀-Alkoxygruppe, eine C₁-C₁₂-Acylaminogruppe oder eine C₁-C₁₂-Acyloxygruppe,
R¹⁴ ein Halogenatom, eine C₁-C₁₂-Alkylgruppe, eine C₁-C₃₀-Alkoxygruppe, eine C₁-C₁₂-Acylaminogruppe, eine C₁-C₁₂-Acylgruppe oder eine C₁-C₁₂-Acyloxygruppe bedeuten und
X die oben angegebene Bedeutung hat,
wobei das elektrisch leitende Polymer in der oxidierten Form vorliegt und in aprotischen Lösemitteln oder Lösemittelgemischen bei 25°C vollständig löslich ist, wobei Lösungen mit einem Gehalt von mindestens 0,5 g des Polymeren in 100 cm³ Lösemittel oder Lösemittelgemisch erhalten werden, und
10 bis 90 Gew.-% eines nichtleitenden Polymeren, welches in Lösemitteln mit einen δp-Wert von kleiner 8,5 (cal/ccm)½ und einem δH-Wert von kleiner 6,5 (cal/ccm)½ löslich oder quellbar ist.

Weiterhin betrifft die Erfindung auch ein Verfahren zur Herstellung der Beschichtungsmasse, dadurch gekennzeichnet, daß man elektrisch leitendes Polymeres und nichtleitendes Polymeres gemeinsam in einem Lösemittel mit einem δₚ-Wert kleiner 8,5 (cal/ccm)^{½} und einem δ_{H}-Wert kleiner 6,5 (cal/ccm)^{½} löst oder quellen läßt und das Gemisch aus dem Lösemittel zurückgewinnt.

Die erfindungsgemäße Beschichtungsmasse besteht aus einem elektrisch leitenden Polymer und einem nichtleitenden Polymer.

Das elektrisch leitende Polymer enthält Struktureinheiten, welche sich durch Verknüpfung in 2-Stellung und/oder 5-Stellung von mindestens einem Monomeren der Formel (I) ableiten

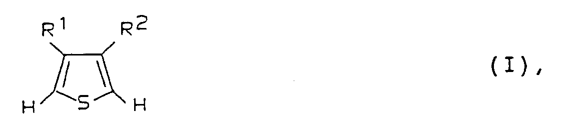

R¹ ist eine geradkettige oder verzweigte C₆-C₃₀-, vorzugsweise C₈-C₂₂- und insbesondere C₁₀-C₁₆-Alkoxygruppe.

R² ist insbesondere ein Wasserstoffatom oder eine C₁-C₃₀-, vorzugsweise C₁-C₂₂- und insbesondere C₆-C₁₂-Alkoxygruppe.

Beispiele für Vertreter der Formel (I) sind 3-Hexyloxythiophen, 3-Heptyloxythiophen, 3-Octyloxythiophen, 3-Nonyloxythiophen, 3-Decyloxythiophen, 3-Undecycloxythiophen, 3-Dodecyloxythiophen, 3-Tetradecyloxythiophen, 3-Pentadecyloxythiophen, 3-Hexadecyloxythiophen, 3-Octadecyloxythiophen, 3-Eicosyloxythiophen, 3-Docosyloxythiophen, 3-(2'-Ethylhexyloxy)thiophen, 3-(2',4',4'-Trimethylpentyloxy) thiophen, 3,4-Dihexyloxythiophen, 3,4-Dioctyloxythiophen, 3,4-Dinonyloxythiophen, 3,4-Didodecyloxythiophen, 3-Methoxy-4-pentyloxythiophen, 3-Hexyloxy-4-methoxythiophen, 3-Methoxy-4-nonyloxythiophen, 3-Dodecyloxy-4-methoxythiophen, 3-Docosyloxy-4-methoxythiophen, 3-Ethoxy-4-pentyloxythiophen, 3-Ethoxy-4-hexyloxythiophen, 3-Butoxy-4-dodecyloxythiophen, 3-(2'-Ethylhexyloxy)-4-methoxythiophen.

Die erfindungsgemäß zu verwendenden elektrisch leitenden Polymeren enthalten 11 bis 100 Struktureinheiten. Die Menge der Struktureinheiten, die sich von mindestens einem Monomeren der Formel (I) ableiten, beträgt im statistischen Mittel 60 bis 100 mol-%, vorzugsweise 90 bis 100 mol-% und insbesondere 95 bis 100 mol-%, bezogen auf die im undotierten Polymeren vorhandenen Struktureinheiten.

Als Comonomere für die Monomeren der Formel (I) kommen vorzugsweise die Monomeren der Formeln (II), (III) und (IV) in Frage.

Beispielsweise seien hier genannt Verbindungen der Formel (II) 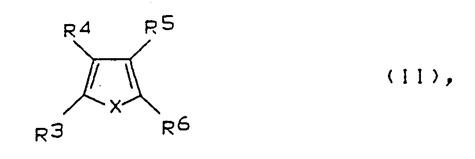
R⁴ und R⁵ sind unabhängig voneinander ein Wasserstoffatom, ein Halogenatom, eine C₁-C₁₂-, vorzugsweise C₁-C₄-Alkylgruppe, eine Alkoxyalkylgruppe, vorzugsweise Alkoxymethyl, eine Arylmethylgruppe, vorzugsweise Benzyl oder Thienylmethyl, eine Arylgruppe, vorzugsweise Phenyl oder Thienyl, eine C₁-C₄-, vorzugsweise C₁-C₂-Alkoxygruppe oder -O(CH₂CH₂O)ₙCH₃ mit n = 1 bis 4, vorzugsweise 1 oder 2 oder bilden zusammen mit den sie verbindenden C-Atomen einen aromatischen Ring, vorzugsweise einen Benzol-, Thiophen- oder Pyrrolring.

R³ und R⁶ sind unabhängig voneinander ein Wasserstoffatom oder bilden jeweils mit R⁴ oder R⁵ zusammen mit den sie verbindenden C-Atomen einen aromatischen Ring, vorzugsweise einen Benzol-, Thiophen- oder Pyrrolring.

X bedeutet ein Sauerstoffatom, ein Schwefelatom, eine NH-Gruppe, eine N-Alkylgruppe, vorzugsweise N-C₁-C₄-Alkyl, oder eine N-Arylgruppe, vorzugsweise N-Phenyl.

Geeignet sind Pyrrol, 3-Chlorpyrrol, 3-Methylpyrrol, 3,4-Dimethylpyrrol, N-Methylpyrrol, Thieno [3,2-b]pyrrol, Carbazol, Thiophen, 3-Methylthiophen, 3-Octylthiophen, 3,4-Dimethylthiophen, 3,4-Diethylthiophen, 3-(Methoxyethoxymethyl)thiophen, 3-(Methoxyethoxyethoxymethyl)thiophen, 3-Methoxythiophen, 3-Ethoxythiophen, 3-Propoxythiophen, 3-Butoxythiophen, 3-(Methoxyethoxy)thiophen, 3-(Methoxyethoxyethoxy)thiophen, 3-Methoxy-4-methylthiophen, 3-Ethoxy-4-methylthiophen, 3-Butoxy-4-methylthiophen, 3-Ethyl-4-methoxythiophen, 3-Butyl-4-methoxythiphen, 3-Dodecyl-4-methoxythiophen, 3,4-Dimethoxythiophen und Thieno[2,3-b] thiophen, Dithieno [3,2-b; 2',3'-d]thiophen, Dibenzothiophen, Isothianaphten.

Weiterhin kommen als Comonomere für Monomere der Formel (I) solche der Formel (III) in Betracht. 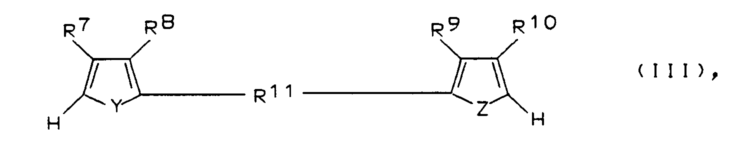
R⁷, R⁸, R⁹ und R¹⁰ sind unabhängig voneinander ein Wasserstoffatom, eine C₁-C₁₂-, vorzugsweise C₁-C₄-Alkylgruppe, eine Arylgruppe, vorzugsweise Phenyl oder Thienyl oder eine C₁-C₃₀-, vorzugsweise C₁-C₁₂-Alkoxygruppe.

Y und Z bedeuten ein Sauerstoffatom, ein Schwefelatom, eine NH-Gruppe, eine N-Alkylgruppe, vorzugsweise N-C₁-C₄-Alkyl, oder eine N-Arylgruppe, vorzugsweise N-phenyl.

R¹¹ steht für Arylen, vorzugsweise Phenylen, Heteroarylen, vorzugsweise Thienylen, Furanylen, Pyrrolylen oder ein System der Formel (-CH=CH-)ₚ mit p = 1, 2 oder 3.

Geeignet sind insbesondere 1,2-Di-(2-thienyl)ethen, 1,2-Di-(3-methylthien-2-yl)ethen, 1,2-Di-(2-furanyl)ethen, 1-(2-Furanyl)-2-(2-thienyl)ethen, 1,4-Di-(2-thienyl)-buta-1,3-dien, 1,4-Di-(2-thienyl)benzol, 2,5-Di-(2-thienyl)thiophen (Terthienyl), 2,5-Di-(2-thienyl)-pyrrol, 2,2'-Dithiophen, 3,3'-Dimethyl-2,2'-bithiophen, 3,3'-Dimethoxy-2,2'-bithiophen, 3,4'-Dimethoxy-2,2'-bithiophen, 4,4'-Dimethoxy-2,2'-bithiophen, 3,3'-Dihexyloxy-2,2'-bithiophen, 4,4'-Didodecyloxy-2,2'-bithiophen, 3-Dodecyloxy-4'-methoxy-2,2'-bithiophen.

Die Menge der Struktureinheiten, die sich von Monomeren der Formel (II) ableiten, beträgt im statistischen Mittel 0 bis 40 mol-%, vorzugsweise 0 bis 10 mol-%. Die sich von Monomeren der Formel (III) ableitenden Struktureinheiten sind im statistischen Mittel zu 0 bis 40 mol-%, vorzugsweise 0 bis 10 mol-% vorhanden.

Weiterhin können die Endgruppen der erfindungsgemäß zu verwendenden elektrisch leitenden Polymeren von Struktureinheiten der Monomeren der Formel (IV) gebildet werden, welche zur Modifizierung des Polymerisationsgrades und der physikalischen Eigenschaften zu den Monomeren der Formel (I) zugesetzt werden können. 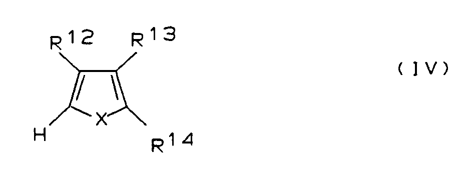
R¹² und R¹³ sind unabhängig voneinander ein Wasserstoffatom, ein Halogenatom, vorzugsweise Chlor oder Brom, eine C₁-C₁₂-, vorzugsweise C₁-C₄-Alkylgruppe, eine C₁-C₃₀-, vorzugsweise C₁-C₁₂-Alkoxygruppe, eine C₁-C₁₂-Alcylaminogruppe, vorzugsweise Acetylamino oder eine C₁-C₁₂-Acyloxygruppe, vorzugsweise Acetyloxy.
R¹⁴ ist ein Halogenatom, vorzugsweise Chlor oder Brom, eine C₁-C₁₂-, vorzugsweise C₁-C₄-Alkylgruppe, eine C₁-C₃₀-, vorzugsweise C₁-C₁₂-Alkoxygruppe, eine C₁-C₁₂-Acetylaminogruppe, vorzugsweise Acetylamino, eine C₁-C₁₂-Acylgruppe, vorzugsweise Acetyl, oder eine C₁-C₁₂-Acyloxygruppe, vorzugsweise Acetyloxy.
X hat die oben angegebene Bedeutung.

Beispiele für Verbindungen der Formel (IV) sind 2-Bromthiophen, 2-Chlorthiophen, 2-Methylthiophen, 2-Dodecylthiophen, 2-Methoxythiophen, 2-Hexyloxythiophen, 2-Dodecyloxythiophen, 2-Acetylaminothiophen, 2-Brom-3-methoxythiophen, 2-Brom-4-methoxythiophen, 2-Chlor-3-methylthiophen, 2,3-Dimethylthiophen, 2,4-Dimethylthiophen, 2,3-Dimethoxythiophen, 2,4-Dimethoxythiophen, 3-Methoxy-2-methylthiophen, 3-Hexyloxy-2-methylthiophen, 2-Methoxy-3-methylthiophen, 4-Methoxy-2-methylthiophen, 2-Acetylamino-3-methoxythiophen, 2-Acetylamino-4-methoxythiophen, 2,3,4-Trimethylthiophen, 3,4-Dimethyl-2-methoxythiophen, 2,4-Dimethyl-3-methoxythiophen, 3,4-Dimethyl-2-dodecyloxythiophen, 3,4-Dimethoxy-2-methylthiophen, 2,3,4-Trimethoxythiophen, 2-Acetyl-3,4-dimethoxythiophen, 2-Brompyrrol, 2-Chlorpyrrol, 2-Acetylpyrrol, 2-Chlor-3-methylpyrrol, 2-Brom-3,4-dimethylpyrrol, 2-Methylfuran, 2-Methoxyfuran, 2,3,4-Trimethylfuran.

Aufgrund der Substitution in der 2-Stellung wirken die Verbindungen der Formel (IV) kettenabbrechend. Ihr Anteil beträgt in der Regel 0 bis 40 mol-%, vorzugsweise weniger als 10 mol-%.

Die vorstehenden Comonomeren der Formeln (II), (III) und (IV) können auch in Mischung untereinander verwendet werden. Die Herstellung der Monomeren der Formel (I) und der Comonomeren der Formeln (II), (III) und (IV) ist aus dem Stand der Technik bekannt oder in der Patentanmeldung EP-A-0 328 984 beschrieben.

Die löslichen, elektrisch leitenden Polymeren enthalten in der oxidierten Form zur Kompensation der positiven Ladungen eine entsprechende Zahl von Anionen. Dabei handelt es sich vorzugsweise um die Anionen des Leitsalzes bzw. des Oxidationsmittels, das beim Herstellungsverfahren eingesetzt wurde. Als Beispiele für geeignete Anionen seien hier geannt: BF₄⁻, PF₆⁻, PO₄3⁻, AsF₆⁻, SbCl₆⁻, SO₄2⁻, HSO₄⁻, Alkyl-SO₃⁻, Perfluoralkyl-SO₃⁻, Aryl-SO₃⁻, F⁻, Cl⁻, J₃⁻, FeCl₄⁻, Fe[(CN)₆]3⁻. Bei Verzicht auf die thermische Stabilität kommen auch ClO₄⁻, JO₄⁻, und NO₃⁻, in Frage. Bevorzugt sind erfindungsgemäß BF₄⁻, PF₆⁻, CF₃SO₃⁻ und p-Toluolsulfonat. Es können auch Gemische der oben genannten in das Polymere eingebrachten Anionen vorliegen. Die Zahl dieser Anionen, bezogen auf die Zahl der Monomereinheiten, beträgt zumeist 10 bis 30 %, vorzugsweise 15 bis 25 %.

Die Herstellung der erfindungsgemäß zu verwendenden elektrisch leitenden Polymeren erfolgt durch oxidative Polymerisation, vorzugsweise durch elektrochemische (anodische) Polymerisation der Monomeren.

Die elektrisch leitenden Polymeren und ihre Herstellung sind Gegenstand der Patentanmeldung EP-A-0 328 983.

Das in der erfindungsgemäßen Beschichtungsmasse ebenfalls enthaltene nichtleitende Polymere soll löslich oder quellbar sein in Lösemitteln oder Lösemittelgemischen mit einem δₚ-Wert (deltaₚ-Wert) kleiner 8,5, vorzugsweise kleiner 5,5 (cal/ccm)^{½} und einem δ_{H}-Wert (delta_{H}-Wert) kleiner 6,5, vorzugsweise kleiner 5,0 (cal/ccm)^{½}.

Geeignete nichtleitende Polymere sind Poly-vinylformal, Poly-vinylacetal, Poly-vinylbutyral, Poly-vinylacetat, Poly-vinylchlorid, Poly-vinylmethylether, Poly-vinylmethylketon, Poly-maleinsäureanhydrid, Poly-styrol, Poly-N-vinylcarbazol, Poly-N-vinylpyrrolidon, Poly-vinylpyridin, Poly-methylacrylat, Poly-methylmethacrylat, Poly-acrylnitril, Poly-acetaldehyd, Poly-acrolein, Poly-ethylenoxid, Poly-tetrahydrofuran, aliphatische Polyester, Poly-carbonat, Poly-butylisocyanat, natürliches Gummi, Cyclokautschukharze, Poly-urethan, Methylcellulose, Ethylcellulose, Cellulosetriacetat, Poly-methylsiloxan.

Bevorzugt werden Poly-methylmethacrylat, Polystyrol, Styrol-Acrylnitril-Copolymere, Poly-vinylacetat, Poly-vinylacetal, Poly-vinylchlorid, Cyclokautschukharze und Poly-carbonat.

Neben dem elektrisch leitenden und dem nichtleitenden Polymer kann die erfindungsgemäße Beschichtungsmasse noch weitere Zusatzstoffe wie beispielsweise Stabilisatoren, Weichmacher, Pigmente, Mattierungsmittel, Gleitmittel und andere Additive enthalten.

Die Beschichtungsmasse enthält 10 bis 90, vorzugsweise 30 bis 90 Gew.-%, bezogen auf die Gesamtmenge, elektrisch leitendes Polymer und 10 bis 90, vorzugsweise 10 bis 70 Gew.-%, bezogen auf die Gesamtmenge, nichtleitendes Polymer. Weitere Zusatzstoffe werden, falls erforderlich, zusätzlich hinzugefügt.

Als Lösemittel oder Quellmittel für das elektrisch leitende Polymer und das nichtleitende Polymer dienen aprotische Lösemittel mit einem δₚ-Wert kleiner 8,5, vorzugsweise kleiner 5,5 (cal/ccm)^{½} und einem δ_{H}-Wert kleiner 6,5, vorzugsweise kleiner 5,0 (cal/ccm)^{½}. Die δ-Werte sind aufgeführt in A.F. Barton, Handbook of Solubility Parameters and other Cohesion Parameters, CRC Press 1983, Seite 153-161.

Geeignet sind beispielsweise Aceton, Acetonitril, N-Methyl pyrrolidon, Nitromethan, Nitropropan, γ-Butyrolacton, Methylethylketon, Benzaldehyd, Cyclohexanon, Methylisobutylketon, Tetrahydrofuran, Methylenchlorid, Butylacetat, Xylol, Toluol, Diethylether.

Bevorzugt werden Tetrahydrofuran, Cyclohexanon, Aceton, Methylisobutylketon, γ-Butyrolacton, Nitropropan, Nitromethan Butylacetat. Nachstehend die δ-Werte einiger geeigneter Lösemittel

| | δₚ[(cal/ccm)^{½}] | δ_{H}[(cal/ccm)^{½}] |
|---|---|---|
| γ-Butyrolacton | 8,3 | 3,7 |
| Nitropropan | 6,05 | 2,05 |
| Cyclohexanon | 3,1 | 2,5 |
| THF | 2,8 | 3,9 |
| Aceton | 5,1 | 3,4 |
| Toluol | 7 | 1 |
| Methylisobutylketon | 3 | 2 |
| Butylacetat | 1,8 | 3,1 |
| N-Methyl-pyrrolidon | 6 | 3,5 |
| Dichlormethan | 3,1 | 3 |
| O-Xylol | 0,5 | 1,5 |
| Diethylether | 1,4 | 2,5 |

Zur Herstellung der erfindungsgemäßen Beschichtungsmasse werden elektrisch leitendes Polymer und nichtleitendes Polymer zusammen in dem Lösemittel gelöst oder gequollen. Dies geschieht bei einer Temperatur zwischen Schmelz- und Siedepunkt des eingesetzten Lösemittels oder Lösemittelgemisches, vorzugsweise im Bereich von 0°C bis 80°C, insbesondere von 20 bis 60°C, gegebenenfalls unter Rühren oder anderen Mischtechniken. Die Gesamtkonzentration der beiden Partner im Lösemittel beträgt 0,1 bis 20, vorzugsweise 0,5 bis 10 Gew.-%. Bei Bedarf werden danach die übrigen Zusatzstoffe hinzugefügt.

Durch Variation der Mengenverhältnisse von elektrisch leitendem Polymer zu nichtleitendem Polymer können die Eigenschaften der Beschichtungsmasse, wie Oberflächenwiderstand der Beschichtung, spezifischer Widerstand, Filmbildung, und die mechanischen Eigenschaften der Beschichtung, wie Transparenz, Abriebfestigkeit, Resistenz gegen organische und anorganische Flüssigkeiten, den Anforderungen angepaßt werden.

Aus der Lösung oder Suspension kann die Beschichtungsmasse als solche nach bekannten Methoden zurückgewonnen werden, vorzugsweise wird jedoch die Lösung oder Suspension direkt weiterverwendet.

Diese Lösungen können nach den üblichen Methoden verarbeitet werden, wie sie bei der Beschichtung von Polymerlösungen auf beliebige Substrate wie Glas, Metalle, Halbleiter und Kunststoffe eingesetzt werden: Spin-coating, Beschichten aus einer Breitschlitzdüse, Rakelbeschichtung, Tauchbeschichtung, Sprühbeschichtung, elektrostatische Sprühbeschichtung, Walzenbeschichtung, Drucken und ähnliche Verfahren. Die Schichtdicke der Beschichtung wird durch das Auftragsverfahren, die Trocknungsbedingungen und die Viskosität der Lösungen bestimmt und liegt üblicherweise im Bereich von 20 nm bis 1000 nm.

Die Schichtdicke der leitfähigen Schicht richtet sich weiterhin weitgehend nach der gewünschten Leitfähigkeit und der Transparenz. Mit wachsender Schichtdicke wird der Oberflächenwiderstand kleiner und die Transparenz schlechter. Die verwendeten elektrisch leitfähigen Polymeren besitzen einen spezifischen Widerstand zwischen 10⁻⁴ S/cm und 10 S/cm, so daß eine Schichtdicke von 100 nm einen Oberflächenwiderstand zwischen 1·10⁹ Ohm und 1·10⁴ Ohm ergibt. Die Extinktion bei einer Schichtdicke von 100 nm hat im sichtbaren Bereich, wenn überhaupt, nur ein schwach ausgeprägtes Maximum zwischen 550 nm und 900 nm, das Hauptmaximum der Absorption liegt im nahen Infrarot bei Wellenlängen zwischen 1000 nm und 3000 nm, in Transmission erscheinen die Beschichtungen meist blaß blau oder grau. Das bedeutet, daß die erfindungsgemäßen Beschichtungen im sichtbaren Bereich sehr gut transparent sind und gleichzeitig die Aufgabe der Ableitung von elektrischen Ladungen sehr gut erfüllen. Besonders geeignet sind solche aufgebrachten Schichten aus elektrisch leitenden Polymeren auf Kunststoffen wie Polyethylenterephthalat, Polyethylen, Polypropylen, Polyvinylchlorid, Polyacrylnitril u.ä., wenn sie außerdem noch im sichtbaren Spektralbereich transparent sind.

Folienbahnen können auf einfache Weise mit einer leitfähigen Schicht versehen werden, indem man dieselben Verfahren und Maschinen benutzt wie sie z.B. bei der Beschichtung von photographischen Filmen, Folien oder von Aluminiumträgern für Offsetdruckplatten verwendet werden. Im allgemeinen braucht die leitfähige Beschichtung nur auf einer Seite der Folie aufgebracht werden, sofern das Substrat nicht zu dick ist. Falls es aber notwendig sein sollte, kann auch die andere Seite der Folie mit einer leitfähigen Schicht versehen werden. Diese muß nicht notwendigerweise mit der leitfähigen Schicht auf der Vorderseite identisch sein.

Weiterhin können Materialien mit großer innerer Oberfläche wie Textilien, Stoffbahnen, Fasern, Schwämme, geschäumter Kunststoff etc. durch Tauchen beschichtet werden.

Durch das Aufbringen von dünnen Schichten mit Schichtdicken kleiner als 1 µm aus der erfindungsgemäßen Beschichtungsmasse können Katalysatoren, elektrisch leitende Drähte, Sensoren, Halbleiter-Bauelemente, Solarzellen, Schutzüberzüge für Solarzellen, Abschirmmaterialien, Tarnanstriche im Infrarot- und Mikrowellengebiet, Flächenheizleiter, Spezialelektroden, elektrisch leitende bzw. antistatisch ausgerüstete Folien und Fasern, antistatisch ausgerüstete Schaumstoffe, Folien für Schallplattenhüllen, leitfähige Trägerfolien für Filmmaterialien, insbesondere für photographische Filme und für Röntgenfilme, Skalenabdeckungen für Meßgeräte, Kontrastverstärkung für Bildschirme verknüpft mit Verhinderung elektrostatischer Aufladung entweder durch direktes Beschichten der Bildschirm-Vorderseite, oder durch Vorsetzen einer beschichteten Glas- oder Kunststoff-Platte, oder durch Anbringen einer beschichteten Folie, Touch-Panel Anordnungen für Bildschirme, auf einfache Weise hergestellt und realisiert werden.

Die Kombination der besonderen Eigenschaften der löslichen elektrisch leitenden Polymeren mit nicht-leitenden Polymeren ermöglichen ihren Einsatz in Anwendungen, die vorher nicht möglich war, weil die üblichen leitfähigen Polymeren im dotierten Zustand nicht löslich waren. So lassen sich Verfahren, die bei der Herstellung von Bauteilen der Mikroelektronik eingesetzt werden, in analoger Weise anwenden: Spin-coating, Strukturierung mit den bekannten Verfahren der Dünnfilmtechnologie z.B. mit lichtempfindlichem Lack oder Resist.

Die folgenden Beispiele sollen die Erfindung weiter erläutern. Die angegebenen Mengen beziehen sich auf das Gewicht.

### Beispiel 1

4,34 Teile Tetraethylammoniumtetrafluoroborat, 4,53 Teile 3-Nonyloxythiophen und 200 Teile Acetonitril wurden in eine ungeteilte Elektrolysezelle mit Kühlmantel gegeben. Die Kathode bestand aus einem V2A-Stahl-Blech von 60 mm Länge und 55 mm Breite. Als Anode wurde ein Kohlenstoff-Filz (Flächengewicht 0,4 kg/m², spez. Oberfläche (BET) ca. 1,5 m²/g) von 60 mm Länge, 55 mm Breite und 4 mm Dicke eingesetzt. Die Anode wurde in einem Abstand von 2 cm parallel zur Kathode befestigt, getrennt über einen Abstandshalter aus Polypropylen-Netz. Bei einer Elektrolysetemperatur von 20°C und einem Anodenstrom von 100 mA erhielt man eine Zellenspannung von 3 bis 6 Volt. Nach der Hälfte der theoretisch benötigten Strommenge wurde die mit den Polymeren beladene Anode gegen eine neue ausgetauscht und nach Verbrauch der theoretischen Strommenge wurde die Elektrolyse beendet. Die mit dem Rohprodukt beladenen Anoden wurden nach dem Trocknen in ein Bad mit Hexan gestellt und dort mehrfach längere Zeit digeriert. Nach dem Trocknen wurden die mit den Polymeren beladenen Kohlefilze in einem Bad mit Tetrahydrofuran solange digeriert, bis die Polymeren praktisch vollständig in Lösung gegangen waren. Die Lösung wurde über einen Glasfiltertiegel der Porengröße G3 filtriert und das Filtrat im Rotationsverdampfer zur Trockene eingeengt. Das Rohprodukt wurde mechanisch zerkleinert, mit Wasser gewaschen, getrocknet, mit Pentan gewaschen und erneut getrocknet. Es wurden 1,5 Teile eines blauschwarz glänzenden Feststoffs erhalten. Die Elementaranalyse lieferte folgende Werte: 64,3% C, 8,4% H, 13,8% S, 5,4% F. Ein Pulverpreßling des gemahlenen Produkts besaß eine spezifische Leitfähigkeit von 4,8·10⁻³ S/cm. Bei der DTG wurde bis 220°C ein Gewichtsverlust von weniger als 10 % beobachtet. Die GPC der undotierten Form ergab eine mittlere Molmasse (Gewichtsmittel) von 4500.

Die folgenden Bestandteile wurden durch Rühren in 20 cm³ Acetonitril, 40 cm³ Cyclohexanon und 40 cm³ THF gelöst: 0,8 g des vorstehend beschriebenen elektrisch leitenden Polymeren und 0,2 g Poly-methylmethacrylat mit einem Schmelzindex MFI (230/3,8)= 11,0 g/10 min, bestimmt nach DIN 53735, und einer Molmasse von 1,2·10 g/Mol. Die Lösung wurde mit Hilfe eines Spin-coaters mit einer Umdrehungszahl von ca. 1000 U/min auf ein Glassubstrat von 50 mm · 50 mm beschichtet. Die Dicke des Films wurde mit einem Profilometer gemessen und betrug 120 nm. Die Schicht wurde an zwei gegenüberliegenden Kanten mit Leitsilber versehen und auf jeder Seite mit zwei Kupferdrähten von 50 µm Durchmesser kontaktiert. Der spezifische Widerstand wurde mit einem Elektrometer im V/I Mode bei Spannungen zwischen -100 V und 100 V im 10 V-Schritten gemessen. Der gemittelte Wert des spezifischen Widerstands betrug 2·10³ Ohm·cm. Bei der gleichen Schicht wurde ein Transmissions-Spektrum aufgenommen, das ein Hauptmaximum bei 1100 nm und eine optische Dichte 0,37 aufwies.

Die gleiche Beschichtungslösung wurde bei gleichen Bedingungen auf größere Glasplatten von 20 cm · 20 cm geschleudert. Man erhielt sehr homogene und in der Schichtdicke gleichmäßige Filme auf dem Glas. Diese beschichteten Glasplatten eignen sich ausgezeichnet zur Kontrasterhöhung bei Bildschirmgeräten, wenn sie vor dem Bildschirm befestigt wurden. Außerdem konnten sie aufgrund ihrer Leitfähigkeit zur Ableitung von elektrostatischen Ladungen, die von dem Bildschirm induziert wurden, benutzt werden. Dazu wurde die leitfähige Schicht am Rand mit einem dünnen Kupferdraht kontaktiert, wie oben beschrieben, und dieser mit der Schutzerde des Gerätes verbunden. Dadurch wurde die Verschmutzung des Bildschirms verhindert und gleichzeitig der Kontrast erhöht.

### Beispiel 2

Mit den gleichen Materialien wie in Beispiel 1 wurde folgende Lösung angesetzt: 0,5 g leitfähiges Polymer und 0,5 g Poly-methylmethacrylat in 50 cm³ THF, 30 cm³ Cyclohexanon, 20 cm³ Butylacetat. Nach Aufschleudern und Messung wie in Beispiel 1 beschrieben, erhielt man folgende Meßwerte: Schichtdicke 140 nm, spezifischer Widerstand 5·10³ Ohm·cm. Diese Lösung wurde ebenfalls auf größere Glasplatten geschleudert und vor einem Datensichtgerät angebracht. Auch hier erhielt man eine Verbesserung des Kontrasts und eine gute antistatische Wirkung.

### Beispiel 3

Mit den gleichen Materialien wie in Beispiel 1 wurde folgende Lösung in 60 cm³ THF, 20 cm³ Cyclohexanon, 20 cm³ Butylacetat angesetzt und auf Glasplatten aufgeschleudert: 0,2 g leitfähiges Polymer und 0,8 g Poly-methylmethacrylat. Die Messung in der oben beschriebenen Weise ergab folgende Daten: Schichtdicke 40,3 nm, spezifischer Widerstand 4·10⁵ Ohm·cm. Vor einem Bildschirm angebracht erhielt man eine antistatische Wirkung, aber kaum noch eine Kontrastverbesserung.

### Beispiel 4

4,34 Teile Tetraethylammoniumtetrafluoroborat, 5,36 Teile 3-Dodecyloxythiophen und 200 Teile Acetonitril wurden in eine ungeteilte Elektrolysezelle mit Kühlmantel gegeben. Die Kathode bestand aus einem V2A-Stahl-Blech von 60 mm Länge und 55 mm Breite. Als Anode wurde ein Platin-Blech von 60 mm Länge und 55 mm Breite eingesetzt. Bei einer Elektrolysetemperatur von 20°C und einem Anodenstrom von 50 mA erhielt man eine Zellenspannung von 3 bis 6 Volt. Nach Verbrauch eines Viertels der theoretisch benötigten Strommenge wurde das auf der Anode abgeschiedene Polymere mechanisch abgetrennt und die Anode erneut eingesetzt. Dieses Verfahren wurde bis zum Verbrauch der theoretisch benötigten Strommenge wiederholt. Das gesammelte Rohprodukt wurde mechanisch zerkleinert, mit Wasser gewaschen, getrocknet, mit Pentan und Acetonitril gewaschen und erneut getrocknet. Das Produkt wurde in Tetrahydrofuran aufgenommen, über einen Glasfiltertiegel der Porengröße G3 filtriert und das Filtrat im Rotationsverdampfer zur Trockene eingeengt. Es wurden 1,88 Teile eines blauschwarz glänzenden Feststoffs erhalten. Die Elementaranalyse lieferte folgende Werte: 65,7 % C, 9,0 % H; 11,1 % S, 5,3 % F. Ein Pulverpreßling des gemahlenen Produkts besaß eine spezifische Leitfähigkeit von 1,5·10⁻² S/cm. Bei der DTG wurde bis 255°C ein Gewichtsverlust von weniger als 10 % beobachtet. Die DSC zeigte ein Maximum bei 350°C (130 J/g). Die GPC der undotierten Form ergab eine mittlere Molmasse (Gewichtsmittel) von 5400.

Von diesem Produkt wurden 1,0 g durch Rühren in 90 cm³ THF und 10 cm³ Butylacetat gelöst sowie 1,0 g Polymethylmethacrylat vom gleichen Typ wie in Beispiel 1. Man erhielt eine blaugraue Lösung, die in einer Kiss-Coat Apparatur benutzt wurde, um eine 1,5 m lange und 0,2 m breite Polyesterfolie zu beschichten. Die Dicke der Folie betrug 125 µm. In der Apparatur wurde die Folie zu einer Endlosschlaufe zusammengeklebt und über zwei Walzen gestülpt, die übereinander angeordnet waren. Eine der Walzen konnte mit einem Motor angetrieben werden. Die Folie berührte an der unteren Walze, deren Durchmesser 200 mm betrug, die Flüssigkeitsoberfläche der Beschichtungslösung, wobei die Lösung die Folie benetzte und einen Meniskus bildete. Mit Hilfe der angetriebenen Walzen wurde die Folie an der Oberfläche beschichtet. An der Maschine befand sich eine Trocknungsvorrichtung, so daß der Film gleichzeitig getrocknet werden konnte. Mit einer Bandgeschwindigkeit von 3,0 m/min erhielt man so auf der Folie einen sehr gut haftenden Film, der einen Oberflächenwiderstand von 3,1·10⁶ Ohm und eine optische Dichte von 0,21 bei einer Wellenlänge von 1200 nm aufwies. Die Gleichmäßigkeit des Films war ausgezeichnet und die Haftung auf der so beschichteten Folie war auch nach Ziehen über eine scharfe Kante ohne Fehler.

### Beispiel 5

4,34 Teile Tetraethylammoniumtetrafluoroborat, 5,93 Teile 3-Tetradecyloxythiophen und 200 Teile Acetonitril wurden in eine ungeteilte Elektrolysezelle mit Kühlmantel gegeben. Die Kathode bestand aus einem V2A-Stahl-Blech von 60 mm Länge und 55 mm Breite. Als Anode wurde ein Platin-Blech von 60 mm Länge und 55 mm Breite eingesetzt. Bei einer Elektrolysetemperatur von 20°C und einem Anodenstrom von 50 mA erhielt man eine Zellenspannung von 3 bis 6 Volt. Nach Verbrauch eines Viertels der theoretisch benötigten Strommenge wurde das auf der Anode abgeschiedene Polymere mechanisch abgetrennt und die Anode erneut eingesetzt. Dieses Verfahren wurde bis zum Verbrauch der theoretisch benötigten Strommenge wiederholt. Das gesammelte Rohprodukt wurde mechanisch zerkleinert, mit Wasser gewaschen, getrocknet, mit Pentan und Acetonitril gewaschen und erneut getrocknet. Das Rohprodukt wurde in Tetrahydrofuran aufgenommen, über einen Glasfiltertiegel der Porengröße G3 filtriert und das Filtrat im Rotationsverdampfer zur Trockene eingeengt. Es wurden 2,04 Teile eines blauschwarz glänzenden Feststoffs erhalten. Die Elementaranalyse lieferte folgende Werte: 67,5 % C, 10,0 % H, 10,1 % S, 4,8 % F. Ein Pulverpreßling des gemahlenen Produkts besaß eine spezifische Leitfähigkeit von 1·10⁻² S/cm.

1 g dieses elektrisch leitenden Polymeren wurde gelöst in 100 cm³ eines Lösemittelgemischs mit folgender Zusammensetzung: 2 Teile Toluol, 6 Teile THF, 2 Teile Butylacetat. Dazu wurden 0,8 g Poly-vinylacetat (MG ca 35000, EP 80 bis 100°C) gegeben, durch Rühren gelöst und in derselben Apparatur beschichtet, die in Beispiel 4 beschrieben ist, wobei die Bandgeschwindigkeit 2,5 m/min betrug. Als Folie wurde eine 100 µm dicke Polyesterfolie verwendet. Man erhielt einen auf der Folie sehr gut haftenden Film, der einen Oberflächenwiderstand von 4·10⁷ Ohm aufwies.

### Beispiel 6

Folgende Lösung wurde angesetzt: In 40 cm³ THF, 20 cm³ Butylacetat, 40 cm³ Cyclohexanon wurden 0,6 g des elektrisch leitenden Polymeren, dessen Herstellung im Beispiel 4 beschrieben ist, und 0,4 g Polyvinylchlorid (PVC-P, M_{w} = 40000) bei Zimmertemperatur durch Rühren gelöst. Diese Lösung wurde dazu verwendet, mit einer handelsüblichen Vorrichtung zur Spraybeschichtung eine PVC-Folie von 200 µm Dicke zu beschichten. Die Dicke der aufgesprühten leitfähigen Schicht richtete sich nach der Dauer der Einwirkung. Der Oberflächenwiderstand der beschichteten Folie wurde mit einer Schutzringelektrode nach DIN 53482 gemessen und betrug 4 · 10⁶ Ohm, die optische Dichte 0,2 bei 1300 nm.

### Beispiel 7

In einem Lösemittelgemisch, bestehend aus 30 cm³ THF, 10 cm³ Nitromethan, 10 cm³ N-Methylpyrrolidon und 10 cm³ Butylacetat wurden 1 g des in Beispiel 4 genannten elektrisch leitenden Polymeren und 1,5 g eines Styrol-Acrylnitril-Copolymeren gegeben und durch Rühren bei 50°C gelöst. Diese Lösung wurde in eine Siebdruckvorrichtung gebracht und zum Bedrucken einer Folie aus PVC benutzt. Das bedruckte Muster bestand aus aufeinander senkrecht stehenden Linien von 1 mm Breite mit 1 mm Zwischenraum. Der Oberflächenwiderstand, gemessen mit einer Schutzringelektrode nach DIN 53482, betrug 6·10⁷ Ohm.

### Beispiel 8

Die gleiche Lösung wie in Beispiel 7 wurde dazu verwendet, 100 µm dicke Fasern aus Poly-Acrylnitril durch Eintauchen in die Lösung zu beschichten. Bei einer Einwirkzeit von 1 min erhielt man eine gut auf der Faseroberfläche haftende Beschichtung. Der Widerstand der so beschichteten Fasern wurde durch Kontaktierung mit Leitsilber im Abstand von 10 mm gemessen und betrug 1 · 10⁶ Ohm.

### Beispiel 9

Folgende Lösung wurde angesetzt: in 40 cm³ THF, 10 cm³ Cyclohexanon wurden 0,5 g des elektrisch leitenden Polymeren, dessen Herstellung in Beispiel 4 beschrieben ist, und 0,5 g Polystyrol (Mw = 250000) bei Zimmertemperatur durch Rühren gelöst. Diese Lösung wurde auf 40 °C erwärmt und anschließend aufgeschleudert und gemessen wie in Beispiel 1 beschrieben. Dabei ergaben sich folgende Werte: Schichtdicke 110 nm, spezifischer Widerstand der Schicht: 1·10³ Ohm·cm. Die optische Dichte betrug bei 550 nm nur 0,06.

### Beispiel 10

Folgende Lösung wurde angesetzt: in 270 cm³ THF, 60 cm³ Cyclohexanon wurden 3 g des elektrisch leitenden Polymeren, dessen Herstellung in Beispiel 4 beschrieben ist, und 3 g Cyclokautschukharz vom Typ Alpex CK450 bei Zimmertemperatur durch Rühren gelöst. Mit dieser Lösung wurde eine 125 µm dicke Polyethylenterephtalat-Folie in der in Beispiel 4 beschriebenen Apparatur beschichtet. Dabei ergaben sich folgende Werte: Schichtdicke 150 nm, spezifischer Widerstand der Schicht: 2·10³ Ohm·cm. Die optische Dichte betrug bei 550 nm 0,08.

### Beispiel 11

Folgende Lösung wurde angesetzt: in 670 cm³ THF wurden 6 g des elektrisch leitenden Polymeren, dessen Herstellung in Beispiel 4 beschrieben ist, und 6 g Polyvinylchlorid (PVC-P, Mw = 40000) bei Zimmertemperatur durch Rühren gelöst. Mit dieser Lösung wurde eine 12 µm dicke Polyethylenterephtalat-Folie mittels Dosierung über eine Breitschlitzdüse beschichtet und in einem nachgeschalteten Mehrstufentrockner getrocknet. Dabei ergaben sich folgende Werte: Schichtdicke 140 nm, spezifischer Widerstand der Schicht 6·10³ Ohm·cm. Die optische Dichte betrug bei 550 nm 0,13.

## Patentansprüche

1. Elektrisch leitende Beschichtungsmasse, bestehend aus 10 bis 90 Gew.-% eines elektrisch leitenden Polymeren mit 11 bis 100 Struktureinheiten, die durch Verknüpfung in 2-Stellung und/oder 5-Stellung miteinander verbunden sind, im statistischen Mittel bestehend aus
60 bis 100 mol-% Struktureinheiten, die sich von mindestens einem Monomeren der Formel (I) ableiten 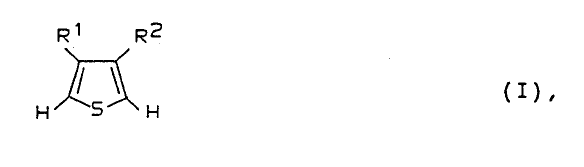 worin
R¹ eine geradkettige oder verzweigte C₆-C₃₀-Alkoxygruppe und
R² ein Wasserstoffatom oder eine C₁-C₃₀-Alkoxygruppe darstellen,
0 bis 40 mol-% Struktureinheiten, die sich von mindestens einem Monomeren der Formel (II) ableiten 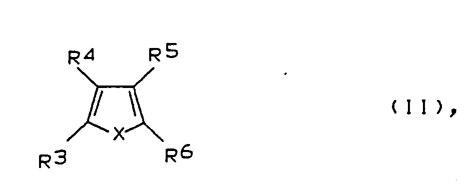 worin
R⁴ und R⁵ unabhängig voneinander ein Wasserstoffatom, ein Halogenatom, eine C₁-C₁₂- Alkylgruppe, Alkoxyalkyl, Arylmethyl, Aryl, eine C₁-C₄-Alkoxygruppe oder -O(CH₂CH₂O)ₙCH₃ mit n = 1 bis 4, bedeuten oder zusammen mit den sie verbindenden C-Atomen einen aromatischen Ring bilden,
R³ und R⁶ unabhängig voneinander ein Wasserstoffatom bedeuten oder R³ zusammen mit R⁴ und den sie verbindenden C-Atomen oder R⁵ zusammen mit R⁶ und den sie verbindenden C-Atomen jeweils einen aromatischen Ring bilden,
X ein Sauerstoffatom, ein Schwefelatom, eine NH-Gruppe, eine N-Alkylgruppe oder eine N-Arylgruppe bedeutet,
0 bis 40 mol-% Struktureinheiten, die sich von mindestens einem Monomeren der Formel (III) ableiten 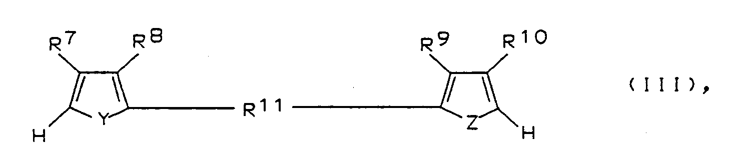 worin
R⁷, R⁸, R⁹ und R¹⁰ unabhängig voneinander ein Wasserstoffatom, eine C₁-C₁₂-Alkylgruppe, eine Arylgruppe oder eine C₁-C₃₀-Alkoxygruppe bedeuten,
Y und Z unabhängig voneinander ein Sauerstoffatom, ein Schwefelatom, eine NH-Gruppe, eine N-Alkylgruppe oder N-Arylgruppe bedeuten,
R¹¹ eine Arylengruppe, eine Heteroarylengruppe oder ein konjugiertes System der Formel (-CH=CH-)ₚ, worin p null, 1, 2 oder 3 ist, bedeutet,
0 bis 40 mol-% Struktureinheiten, die sich von mindestens einer Verbindung der Formel (IV) ableiten 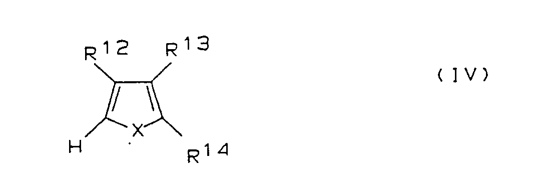 worin
R¹² und R¹³ unabhängig voneinander ein Wasserstoffatom, ein Halogenatom, eine C₁-C₁₂-Alkylgruppe, eine C₁-C₃₀-Alkoxygruppe, eine C₁-C₁₂-Acylaminogruppe oder eine C₁-C₁₂-Acyloxygruppe,
R¹⁴ ein Halogenatom, eine C₁-C₁₂-Alkylgruppe, eine C₁-C₃₀-Alkoxygruppe, eine C₁-C₁₂-Acylaminogruppe, eine C₁-C₁₂-Acylgruppe oder eine C₁₋C₁₂-Acyloxygruppe bedeuten und
X die oben angegebene Bedeutung hat,
wobei das elektrisch leitende Polymere in der oxidierten Form vorleigt und in aprotischen Lösemitteln oder Lösemittelgemischen bei 25°C vollständig löslich ist und Lösungen mit einem Gehalt von mindestens 0,5 g des in 100 cm³ Lösemittel oder Lösemittelgemisch erhalten werden, und
10 bis 90 Gew.-% eines nichtleitenden Polymeren, welches in Lösemitteln mit einen δ_{P}-Wert von kleiner 8,5 (cal/ccm)^{½} und einem δ_{H}-Wert von kleiner 6,5 (cal/ccm)^{½} löslich oder quellbar ist.

2. Beschichtungsmasse nach Anspruch 1, dadurch gekennzeichnet, daß das elektrisch leitende Polymer und das nichtleitende Polymer in Lösemitteln oder Lösemittelgemischen mit einem δₚ-Wert kleiner 5,5 (cal/ccm)^{½} und einem δ_{H}-Wert kleiner 5,0 (cal(ccm)^{½} löslich oder quellbar ist.

3. Beschichtungsmasse nach Anspruch 1, dadurch gekennzeichnet, daß das nichtleitende Polymere Poly-vinylformal, Poly-vinylacetal, Poly-vinylbutyral, Poly-vinylacetat, Poly-vinylchlorid, Poly-vinylmethylether, Poly-vinylmethylketon, Poly-maleinsäureanhydrid, Poly-styrol, Poly-N-vinylcarbazol, Poly-N-vinylpyrrolidon, Poly-vinylpyridin, Poly-methylacrylat, Poly-methylmethacrylat, Poly-acrylnitril, Poly-acetaldehyd, Poly-acrolein, Poly-ethylenoxid, Poly-tetrahydrofuran, aliphatische Polyester, Poly-carbonat, Poly-butylisocyanat, natürliches Gummi, Cyclokautschukharze, Poly-urethan, Methylcellulose, Ethylcellulose, Cellulosetriacetat oder Poly-methylsiloxan ist.

4. Verfahren zur Herstellung der Beschichtungsmasse nach Anspruch 1, dadurch gekennzeichnet, daß man elektrisch leitendes Polymeres in oxidierter Form und nichtleitendes Polymeres gemeinsam in einem Lösemittel mit einem δ_{P}-Wert kleiner 8,5 (cal/ccm)^{½} und einem δ_{H}-Wert kleiner 6,5 (cal/ccm)^{½} löst oder quellen läßt und das Gemisch aus dem Lösemittel zurückgewinnt.

5. Verwendung der Beschichtungsmasse nach Anspruch 1 zur Herstellung von elektrisch leitenden Schichten auf nicht leitenden und halbleitenden Materialien.

6. Folie aus Kunststoff, beschichtet mit der Beschichtungsmasse gemäß Anspruch 1.

7. Lösung, enthaltend eine elektrisch leitende Beschichtungsmasse, dadurch gekennzeichnet, daß sie 0,1 bis 20 Gew.-% der Beschichtungsmasse gemäß Anspruch 1 gelöst in 80 bis 99,9 Gew.-% eines dipolaren aprotischen Lösungsmittels oder Lösungsmittel-Gemisches enthält, das einen δₚ-Wert kleiner 8,5 (cal/ccm)½ und einen δ_{H}-Wert kleiner 6,5 (cal/ccm)½ aufweist.

## Claims

1. An electroconductive coating composition comprising 10 to 90% by weight of an electroconductive polymer containing 11 to 100 structural units which are connected together by linking in the 2-position and/or 5-position, comprising, on statistal average,
60 to 100 mol-% of structural units derived from at least one monomer of the formula (I) 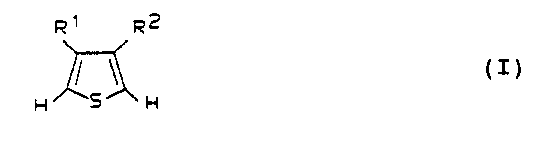 in which
R¹ represents a straight-chain or branched C₆-C₃₀-alkoxy group and
R² represents a hydrogen atom or a C₁-C₃₀-alkoxy group,
0 to 40 mol-% of structural units derived from at least one monomer of the formula (II) 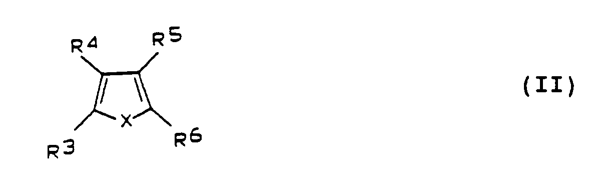 in which
R⁴ and R⁵, independently of one another, denote a hydrogen atom, a halogen atom, a C₁-C₁₂-alkyl group, alkoxyalkyl, arylmethyl, aryl, a C₁-C₄-alkoxy group or -O(CH₂CH₂O)ₙCH₃ where n = 1 to 4, or form an aromatic ring together with the carbon atoms connecting them,
R³ and R⁶, independently of one another, denote a hydrogen atom or R³ together with R⁴ and the carbon atoms connecting them or R⁵ together with R⁶ and the carbon atoms connecting them in each case form an aromatic ring,
X denotes an oxygen atom, a sulfur atom, an NH group, N-alkyl group or N-aryl group,
0 to 40 mol-% of structural units derived from at least one monomer of the formula (III), 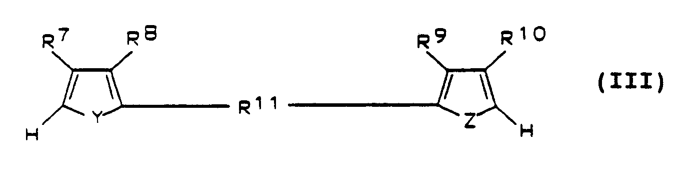 in which
R⁷, R⁸, R⁹ and R¹⁰, independently of one another, denote a hydrogen atom, a C₁-C₁₂-alkyl group, an aryl group or a C₁-C₃₀-alkoxy group,
Y and Z, independently of one another, denote an oxygen atom, a sulfur atom, an NH group, N-alkyl group or N-aryl group,
R¹¹ denotes an arylene group, a heteroarylene group or a conjugated system of formula (-CH=CH-)ₚ in which p is zero, 1, 2 or 3,
0 to 40 mol-% of structural units derived from at least one compound of the formula (IV) 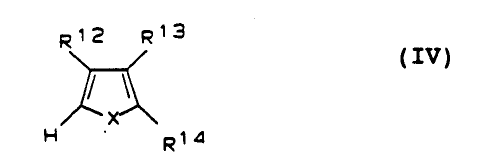 in which
R¹² and R¹³, independently of one another, denote a hydrogen atom, a halogen atom, a C₁-C₁₂-alkyl group, a C₁-C₃₀-alkoxy group, a C₁-C₁₂-acylamino group or a C₁-C₁₂-acyloxy group,
R¹⁴ denotes a halogen atom, a C₁-C₁₂-alkyl group, a C₁-C₃₀-alkoxy group, a C₁-C₁₂-acylamino group, a C₁-C₁₂-acyl group or a C₁-C₁₂-acyloxy group, and
X is as defined above,
where the electroconductive polymer is present in the oxidized form and is fully soluble in aprotic solvents or solvent mixtures at 25°C and solutions are obtained containing at least 0.5 g of the polymer, in 100 cm³ of the solvent or solvent mixture and
10 to 90% by weight of a non-conductive polymer which can be dissolved or swollen in solvents with a δₚ value of less than 8.5 (cal/ccm)^{1/2} and a δ_{H} value of less than 6.5 (cal/ccm)^{1/2}.

2. A coating composition as claimed in claim 1, wherein the electroconductive polymer and the non-conductive polymer can be dissolved or swollen in solvents or solvent mixtures with a δₚ value of less than 5.5 (cal/ccm)^{1/2} and a δ_{H} value of less than 5.0 (cal/ccm)^{1/2}.

3. A coating composition as claimed in claim 1, wherein the non-conductive polymer is poly(vinyl formal), a poly(vinyl acetal), poly(vinyl butyral), poly(vinyl acetate), poly(vinyl chloride), poly(vinyl methyl ether), poly(vinyl methyl ketone), poly(maleic anhydride), polystyrene, poly-N-vinylcarbazole, poly-N-vinylpyrrolidone, poly-vinylpyridine, poly(methyl acrylate), poly(methyl methacrylate), polyacrylonitrile, polyacetaldehyde, polyacrolein, poly(ethylene oxide), polytetrahydrofuran, aliphatic polyesters, polycarbonate, poly(butyl isocyanate), natural rubber, cyclized rubber resins, polyurethane, methylcellulose, ethylcellulose, cellulose triacetate or polymethylsiloxane.

4. A process for the preparation of a coating composition as claimed in claim 1, which comprises dissolving or swelling an electroconductive polymer in oxidized form and a non-conductive polymer together in a solvent with a δₚ value of less than 8.5 (cal/ccm)^{1/2} and a δ_{H} value of less than 6.5 (cal/ccm)^{1/2}, and recovering the mixture from the solvent.

5. The use of a coating composition as claimed in claim 1 for the production of electroconductive coatings on non-conductive and semiconducting materials.

6. A plastics sheet coated with a coating composition as claimed in claim 1.

7. A solution containing an electroconductive coating composition, which comprises 0.1 to 20% by weight of a coating composition as claimed in claim 1 dissolved in 80 to 99.9% by weight of a dipolar aprotic solvent or solvent mixture which has a δₚ value of less than 8.5 (cal/ccm)^{1/2} and a δ_{H} value of less than 6.5 (cal/ccm)^{1/2}.

## Revendications

1. Composition d'enduction conductrice de l'électricité et consistant en 10 à 90 % en poids d'un polymère, conducteur de l'électricité et comportant 11 à 100 motifs structurels, qui sont reliés les uns aux autres par jonction en position 2 et/ou en position 5, ce polymère consistant en moyenne statistique en :
60 à 100 moles % de motifs structurels qui dérivent d'au moins un monomère de formule (I) 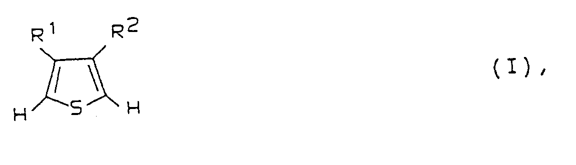 dans laquelle
R¹ représente un groupe alcoxy linéaire ou ramifié en C₆ à C₃₀, et
R² représente un atome d'hydrogène ou un groupe alcoxy en C₁ à C₃₀,
0 à 40 moles % de motifs structurels qui dérivent d'au moins un monomère de formule (II) 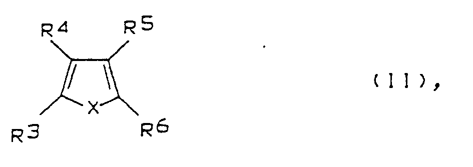 dans laquelle
R⁴ et R⁵ représentent chacun, indépendamment l'un de l'autre, un atome d'hydrogène, un atome d'halogène, un groupe alkyle en C₁ à C₁₂, un groupe alcoxy-alkyle, arylméthyle, aryle , un groupe alcoxy en C₁ à C₄ ou O(CH₂CH₂O)ₙCH₃ avec n valant 1 à 4, ou bien ils forment, avec les atomes de carbone qui les relient, un noyau aromatique ,
R³ et R⁶ représentent chacun, indépendamment l'un de l'autre, un atome d'hydrogène ou bien R³ forme avec R⁴ et avec les atomes de carbone qui les relient, ou bien R⁵ forme avec R⁶ et avec les atomes qui les relient, à chaque fois un noyau aromatique,
X représente un atome d'oxygène, un atome de soufre, un groupe NH, un groupe N-alkyle ou un groupe N-aryle,
0 à 40 moles % de motifs structurels qui dérivent d'au moins un monomère de formule (III) 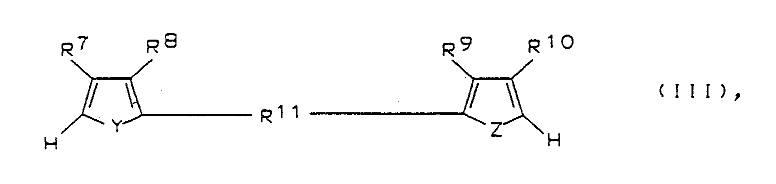 dans laquelle, R⁷, R⁸, R⁹ et R¹⁰ représentent chacun, indépendamment l'un de l'autre, un atome d'hydrogène, un groupe alkyle en C₁ à C₁₂, un groupe aryle ou un groupe alcoxy en C₁ à C₃₀,
Y et Z représentent chacun, indépendamment l'un de l'autre, un atome d'oxygène, un atome de soufre, un groupe NH, un groupe N-alkyle ou un groupe N-aryle,
R¹¹ représente un groupe arylène, un groupe hétéroarylène ou un système conjugué de formule (-CH=CH-)ₚ, dans laquelle p est nul ou vaut 1, 2 ou 3,
0 à 40 moles % de motifs structurels qui dérivent d'au moins un composé de formule (IV) 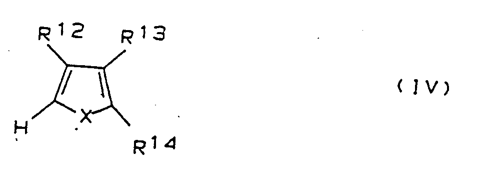 dans laquelle,
R¹² et R¹³ représentent chacun, indépendamment l'un de l'autre,un atome d'hydrogène, un atome d'halogène, un groupe alkyle en C₁ à C₁₂, un groupe alcoxy en C₁ à C₃₀, un groupe acylamino en C₁ à C₁₂ ou un groupe acyloxy en C₁ à C₁₂,
R¹⁴ représente un atome d'halogène, un groupe alkyle en C₁ à C₁₂, un groupe alcoxy en C₁ à C₃₀, un groupe acylamino en C₁ à C₁₂, un groupe acyle en C₁ à C₁₂, ou un groupe acyloxy en C₁ à C₁₂, et
X a le sens précité ,
le polymère conducteur de l'électricité étant présent sous forme oxydée et étant entièrement soluble dans des solvants aprotiques ou dans des mélanges de solvants aprotiques à 25°C, et permettant d'obtenir des solutions ayant une teneur d'au moins 0,5 g de polymère dans 100 cm³ de solvant ou de mélange de solvants, et
10 à 90 % en poids d'un polymère non conducteur, qui est soluble ou gonflable dans des solvants ayant une valeur de δₚ inférieure à 8,5 (cal/cm³)½ et une valeur de δ_{H} inférieure à 6,5 (cal/cm³)½.

2. Composition d'enduction selon la revendication 1, caractérisée en ce que le polymère conducteur de l'électricité et le polymère non conduceur sont solubles ou gonflables dans des solvants ou dans des mélanges de solvants ayant une valeur de δₚ inférieure à 5,5 (cal/cm³)½ et ayant une valeur de δ_{H} inférieure à 5,0 (cal/cm³)½.

3. Composition d'enduction selon la revendication 1, caractérisée en ce que le polymère non conducteur est du poly-vinylformal, du polyvinylacétal, du poly-vinylbutyral; du poly(acétate de vinyle), du poly(chlorure de vinyle), du poly(éther de vinyle et de méthyle), de la poly-vinyl- méthylcétone, du poly(anhydride de l'acide maléique), du polystyrène, du poly-N-vinylcarbazole, de la poly-N-vinyl- pyrrolidone, de la polyvinylpyrridine, du poly(acrylate de méthyle), du poly(méthacrylate de méthyle), du polyacrylo-nitrile, du polyacétaldéhyde, de la poly-acroléine, du poly(oxyde d'éthylène), du poly-tétrahydrofuranne, du polyestère aliphatique, du polycarbonate, du poly(isocyanate de butyle), de la gomme naturelle, des résines de caoutchouc cyclique, du polyuréthanne, de la méthylcellulose, de l'éthyl- cellulose, du triacétate de cellulose ou du polyméthylsiloxane.

4. Procédé pour produire la compositoon d'enduction selon la revendication 1, caractérisé en ce qu'on dissout ou en ce qu'on laisse gonfler un polymère (sous forme oxydée) conducteur de l'électricité et un polymère non conducteur, ensemble dans un solvant ayant une valeur de δₚ inférieure à 8,5 (cal/cm³)^{½} et ayant une valeur de δ_{H} inférieure à 6,5 (cal/cm³)^{½} et en ce qu'on récupère le mélange à partir du solvant.

5. Utilisation de la composition d'enduction selon la revendication 1 pour produire des couches, conductrices de l'électricité, sur des matériaux non conducteurs et semi conducteurs.

6. Feuille en matière plastique, enduite avec la composition d'enduction selon la revendication 1.

7. Solution, contenant une composition d'enduction, conductrice de l'électricité, solution caractérisée en ce qu'elle contient 0,1 à 20 % en poids de la composition d'enduction selon la revendication 1, dissoute dans 80 à 99,9 % en poids d'un solvant ou d'un mélange de solvants aprotique(s) dipolaire(s), présentant une valeur de deltaₚ inférieure à 8,5 (cal/cm³)^{½} et une valeur de δ_{H} inférieure à 6,5 (cal/cm³)^{½}.
